(19) Europäisches Patentamt
European Patent Office
Office européen des brevets

(11) **EP 1 683 706 B1**

(12) **EUROPÄISCHE PATENTSCHRIFT**

(45) Veröffentlichungstag und Bekanntmachung des Hinweises auf die Patenterteilung:
**05.08.2009   Patentblatt 2009/32**

(51) Int Cl.:
***B62D 6/00*** *(2006.01)*          ***B62D 6/04*** *(2006.01)*
***B62D 5/04*** *(2006.01)*

(21) Anmeldenummer: **05112928.6**

(22) Anmeldetag: **23.12.2005**

(54) **Lenksystem für ein Kraftfahrzeug**

Steering system for a motor vehicle

Système de direction pour un véhicule

(84) Benannte Vertragsstaaten:
**DE FR GB IT**

(30) Priorität: **20.01.2005   DE 102005002614**

(43) Veröffentlichungstag der Anmeldung:
**26.07.2006   Patentblatt 2006/30**

(73) Patentinhaber: **Bayerische Motoren Werke Aktiengesellschaft**
**80809 München (DE)**

(72) Erfinder:
• **von Groll, Max**
  **80797, München (DE)**
• **Wimberger, Josef**
  **80992, München (DE)**
• **Meister, Tilo**
  **80937, München (DE)**

(56) Entgegenhaltungen:
**EP-A- 0 711 699          DE-A1- 3 822 171**
**DE-A1- 10 337 086        JP-A- 2003 137 121**

**Beschreibung**

Die Erfindung betrifft ein Lenksystem für ein Kraftfahrzeug mit einem elektronisch ansteuerbaren Stellglied zur Beeinflussung des für den Fahrer an seiner Lenkhandhabe spürbaren Lenkmoments, insbesondere ein Servolenksystem mit einem Elektromotor, der ein den Fahrer beim Aufbringen der Lenkkräfte unterstützendes Servomoment direkt einleitet, wobei das Stellglied und insbesondere der Elektromotor unter Berücksichtung des vom Fahrer aufgebrauchten Lenkmoments und des hieraus resultierenden Lenkwinkels sowie zumindest einer vom Fahrverhalten des Fahrzeugs abgeleiteten Korrekturgröße geeignet angesteuert wird. Zum bekannten Stand der Technik wird neben der DE 38 22 171 C2 auf die DE 103 37 086 A1 verwiesen.

Es sind verschiedenartige Servolenksysteme für (zweispurige) Kraftfahrzeuge bekannt. Besonders bewährt haben sich hydraulische Servolenksysteme, die sich vorteilhafterweise durch eine hervorragende Fahrbahn-Rückmeldung an den Fahrer auszeichnen. Es ist nämlich angestrebt, dass der Fahrer an seinem Lenkrad (bzw. allgemein an seiner Lenkhandhabe) die Reaktion des Fahrzeugs spürt, d.h. dass in gewisser Weise die an den lenkbaren Rädern angreifenden Kräfte geeignet am Lenkrad spürbar sind, um dem Fahrer hierdurch ein Gefühl für das Fahrverhalten des Fahrzeugs zu vermitteln.

Eine bestmögliche Rückmeldung erhält der Fahrer selbstverständlich mit einem rein mechanischen Lenksystem, das keine Unterstützungskraft bereitstellt bzw. einleitet. Wegen mangelndem Komfort finden solche einfachen Lenksysteme heute keine Akzeptanz mehr. Hydraulische Servolenksysteme, bei denen die Unterstützungskraft über einen hydraulisch betriebenen Lenkzylinder in das ansonsten rein mechanische Lenksystem (bspw. eine übliche ZahnstangenLenkung) eingeleitet werden, bieten eine zufrieden stellende Rückmeldung, jedenfalls dann, wenn es sich um solche mit sog. offener Mitte handelt. Letztere haben jedoch einen ungünstigen Wirkungsgrad, d.h. in mit Verbrennungsmotoren angetriebenen Kraftfahrzeugen bei direktem Antrieb der Lenk-Hydraulikpumpe durch den Verbrennungsmotor ist das Lenksystem für einen nicht zu vernachlässigenden Anteil des Kraftstoffverbrauchs verantwortlich.

Hinsichtlich des Energieverbrauchs günstiger sind elektromotorisch betriebene Servo-Lenksysteme, und zwar insbesondere solche, bei denen der Elektromotor ein den Fahrer beim Aufbringen der Lenkkräfte unterstützendes Servomoment direkt in das Lenksystem einleitet, d.h. dass der Elektromotor bspw. die Zahnstange des Lenkgetriebes über ein direktes mechanisches Getriebe direkt antreibt. (Von dieser direkten Einleitung der Unterstützungskraft durch den Elektromotor sind bspw. elektrohydraulische Servo-Lenksysteme zu unterscheiden, bei denen ein Elektromotor eine Pumpe zur Förderung des Hydraulikmediums einer hydraulischen Servolenkung antreibt). Viele der bislang auf dem Markt befindlichen elektromotrisch betriebenen Servo-Lenksysteme mit direkter Krafteinleitung durch den Elektromotor können jedoch hinsichtlich des Kriteriums der Fahrbahn-Rückmeldung nicht das hohe Niveau hydraulischer Servo-Lenksysteme erreichen. Ursächlich hierfür könnten das relativ hohe Trägheitsmoment dieser Elektromotoren sowie die mechanischen Reibungsverluste im Lenksystem sein.

Eine Abhilfemaßnahme für diese geschilderte Problematik aufzuzeigen, ist Aufgabe der vorliegenden Erfindung, d.h. gesucht ist eine einfache Maßnahme, mit Hilfe derer ein übliches elektromotorisches Servolenksystem, bei dem der direkt eine Unterstützungskraft einleitende Elektromotor in konventioneller Weise angesteuert wird und insbesondere abhängig vom vom Fahrer vorgegebenen Lenkmoment, vom jeweiligen Lenkwinkel sowie ggf. von der Fahrgeschwindigkeit des Fahrzeugs ein entsprechendes Unterstützungsmoment bereit stellt, so angesteuert werden kann, dass die Fahrbahn-Rückmeldung des Systems verbessert wird.

Da der Wunsch nach einer guten Fahrbahnrückmeldung aber auch bei anderen Fahrzeug-Lenksystemen besteht, so bspw. bei sog. steer-by-wire-Systemen oder dgl., bei denen ein Elektromotor entsprechend angesteuert wird, um dem Fahrer des Fahrzeugs ein Lenkmoment spürbar zu machen, oder auch bei hydraulischen closed-center-Lenksystemen, bei denen bspw. Hydraulikventile als sog. Stellglieder entsprechend angesteuert werden, um ein geeignetes Servomoment zu erzeugen, soll auch hierfür eine einfache Maßnahme aufgezeigt werden, mit Hilfe derer allgemein ein elektronisch ansteuerbares Stellglied des Lenksystems zur Beeinflussung des für den Fahrer an seiner Lenkhandhabe spürbaren Lenkmoments so angesteuert werden kann, dass die Fahrbahn-Rückmeldung des Systems verbessert wird.

Die Lösung dieser Aufgabe(n) ist für ein Lenksystem nach dem Oberbegriff des Anspruchs 1, wonach bei der Ansteuerung des Stellglieds, insbesondere Elektromotors, zumindest noch eine vom Fahrverhalten des Fahrzeugs abgeleitete Korrekturgröße über ein Hochpassfilter oder ein Differenzierglied geleitet berücksichtigt wird, dadurch gekennzeichnet, dass als Korrekturgröße die Querbeschleunigung an der die lenkbaren Räder aufweisenden Fahrzeug-Vorderachse der konventionellen Ansteuerung des Stellglieds, insbesondere des Elektromotors, aufgeschaltet wird. Vorzugsweise kann die Hochpassfilterung oberhalb einer Eckfrequenz in der Größenordnung von 0,5 Hertz bis 4 Hertz erfolgen.

Aus der DE 103 37 086 A1 ist es bekannt, an einem Fahrzeug-Lenksystem einen sog. Rückstellmoment-Referenzwert unter Berücksichtigung des Reibungszustandes einer Straßenoberfläche zu ermitteln, wozu ein sog. Schlupfwinkel einer sog. Hochpassfilter-Bearbeitung unterworfen wird. Aus der DE 38 22 171 C2 ist ein Servolenksystem mit einem Elektromotor bekannt, bei dem die Querbeschleunigung, die auf das Fahrzeug einwirkt, erfasst wird und eine Korrektureinrichtung vorgesehen ist, die in Abhängigkeit von der Fahrgeschwindigkeit und von der festgestellten Querbeschleunigung ein Rückstelldrehmoment ermittelt. Auch bei der vorliegenden Erfindung wird die Fahrzeug-Querbeschleunigung in Form eines Korrektursignals bei der Ansteuerung des Elektromotors der Servolenkung bzw. allgemein eines Stellglieds zur Beeinflussung des für den Fahrer an seiner Lenkhandhabe spürbaren Lenkmoments berücksichtigt, allerdings nicht zur Bestimmung eines Rückstelldrehmoments, sondern grundsätzlich, und zwar nicht direkt, sondern geeignet hochpassgefiltert oder zumindest differenziert, und zwar aufgrund folgender Überlegungen:

Grundsätzlich ist die Querbeschleunigung und insbesondere diejenige an der die lenkbaren Fahrzeug-Räder aufweisenden Vorderachse ein Maß für die vorliegenden, zwischen den Rädern und der Fahrbahn übertragenen Seitenkräfte. Diese Seitenkräfte beinhalten einen hohen informativen Anteil für den Fahrer, da sie sowohl Aufschluss über den aktuellen Reibwert zwischen Fahrbahn und Reifen geben, als auch über Unebenheiten der Fahrbahn. Wenn nun Änderungen in den Seitenkräften, die beispielsweise aus Reibwertsprüngen der Fahrbahn oder aus Fahrbahnunebenheiten resultieren können, dem Fahrer des Fahrzeugs verstärkt vermittelt werden, erhält dieser also eine verbesserte Fahrbahn-Rückmeldung. Dies soll jedoch im wesentlichen außerhalb der üblichen Ansteuerung des Elektromotors erfolgen, die üblicherweise im Frequenzbereich zwischen 0 Hertz und bis zu 3 Hertz liegt. Aus diesem Grunde wird vorgeschlagen, die entsprechende Korrekturgröße, bei der es sich um die Fahrzeug-Querbeschleunigung bzw. um diejenige an den lenkbaren Rädern handelt, hochpassgefiltert bei der Ansteuerung des Elektromotors zu berücksichtigen. Diese Hochpass-Filterung kann dabei mit einer sog. Eckfrequenz von 0,5 Hertz erfolgen; eine im wesentlichen vollständige Trennung von der üblichen Ansteuerung des Servo-Elektromotors wird jedoch erzielt, wenn die Korrekturgröße über einer Eckfrequenz in der Größenordnung von 4 Hertz hochpassgefiltert berücksichtigt wird. Bei Verwendung eines anderen Stellglieds zur Beeinflussung des für den Fahrer an seiner Lenkhandhabe spürbaren Lenkmoments mögen jedoch durchaus andere Eckfrequenzen günstige Ergebnisse liefern. Schließlich kann anstelle einer Hochpassfilterung auch eine einfache Differentiation der Querbeschleunigung oder allgemein einer sog. Korrekturgröße für die Lösung der zugrunde liegenden Aufgabe ausreichend sein.

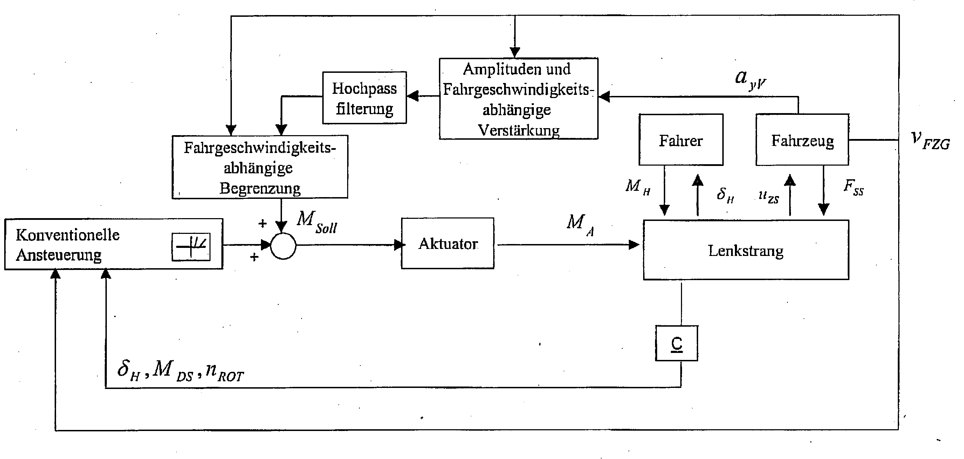

Besonders vorteilhaft, da einfach realisierbar, ist es dabei, wenn die entsprechend bearbeitete Korrekturgröße dem üblich gebildeten Ansteuersignal für den Elektromotor bzw. allgemein für das genannte, elektronisch ansteuerbare Stellglied einfach aufgeschaltet wird. Dies geht auch aus der beigefügten Figur hervor, in der ein Regelkreis zur erfindungsgemäßen Ansteuerung eines Elektromotors, der ein den Fahrer beim Aufbringen der Lenkkräfte unterstützendes Servomoment direkt in das Lenksystem einleitet, als ein bevorzugtes Ausführungsbeispiel eines Lenksystems gemäß vorliegender Erfindung dargestellt ist. Anstelle der Querbeschleunigung des Fahrzeugs wird dabei die Querbeschleunigung an der die lenkbaren Räder aufweisenden Vorderachse als Korrekturgröße der konventionellen Ansteuerung des Elektromotors aufgeschaltet. Auf die Ermittlung dieser Querbeschleunigung an der Vorderachse wird an späterer Stelle noch näher eingegangen.

Im figürlich dargestellten Regelkreis ist der Elektromotor des Servolenksystems als Aktuator bezeichnet, der ein Servomoment $M_A$ abgibt. Dieses wirkt auf den Lenkstrang des Fahrzeugs ein. Zunächst jedoch wirkt auf den Lenkstrang des Fahrzeugs der Fahrer ein, und zwar indem er ein Lenkmoment $M_H$ einleitet und als Reaktion hierauf einen Lenkwinkel $\delta_H$ an seinem Lenkrad erhält. Ausgehend vom Lenkstrang wirkt aufgrund einer Lenkvorgabe des Fahrers auf das Fahrzeug die Verschiebung $u_{ZS}$ der Spurstangen der lenkbaren Räder und als Reaktion hierauf eine Seitenkraft $F_{SS}$ von den lenkbaren Rädern auf den Lenkstrang. Über einen Wandler C werden weitere Größen aus einer Betätigung des Lenkstrangs ermittelt, anhand derer über eine bisherige konventionelle Ansteuerung der Elektromotor als Aktuator im Hinblick auf die Abgabe eines Servomoments $M_A$ geeignet angesteuert wird, und zwar neben dem Lenkwinkel $\delta_H$ und der Lenkwinkel-Änderungsgeschwindigkeit $n_{ROT}$ ein sog. Drehstabmoment $M_{DS}$, das im wesentlichen dem vom Fahrer vorgegebenen Lenkmoment $M_H$ entspricht. Eine weitere Größe, die bei der konventionellen Ansteuerung des Servomotors/Aktuators berücksichtigt wird, ist die Fahrgeschwindigkeit $V_{FZG}$ des Fahrzeugs. Soweit entspricht das Servolenksystem dem bekannten Stand der Technik.

Ergänzend hierzu wird nun die Querbeschleunigung $a_{yV}$ an der Vorderachse des Fahrzeugs bestimmt (wie wird später noch erläutert) und als Korrekturgröße berücksichtigt. Dabei wird zunächst eine amplituden- und fahrgeschwindigkeitsabhängige Verstärkung der Korrekturgröße durchgeführt, bevor diese Korrekturgröße einer Hochpassfilterung mit einer Eckfrequenz in der Größenordnung von 3 Hertz unterworfen wird. Das solchermaßen bearbeitete Signal kann dann noch auf einen Maximalwert, der seinerseits von der Fahrgeschwindigkeit des Fahrzeugs abhängig sein kann, begrenzt werden. Das solchermaßen bearbeitete Signal wird daraufhin dem konventionellen Ansteuerungssignal für den Aktuator (in einer Summationsstelle S) aufgeschaltet. (Anstelle des Elektromotors kann es sich beim Aktuator auch um ein anderes geeignetes sog. Stellglied handeln).

Was die Ermittlung der Querbeschleunigung $a_{yv}$ an der die lenkbaren Räder enthaltenden Vorderachse des Fahrzeugs betrifft, so kann diese entweder mittels eines dort geeignet vorgesehenen Sensors gemessen werden oder aus den Signalen eines üblicherweise ohnehin bereits vorhandenen, bspw. im wesentlichen im Bereich des Schwerpunkts des Fahrzeugs bzw. allgemein an einem sog. Messpunkt M im Fahrzeug vorgesehenen Querbeschleunigungssensors errechnet werden, gemäß folgendem Zusammenhang:

$$a_{yv} = a_{yMP} + (\text{Gierbeschleunigung}) \cdot L_{MP\text{-}VA}$$

mit

$a_{yMP}$ :  Querbeschleunigung im Messpunkt,

$L_{MP\text{-}VA}$ :  Abstand des Messpunkts von der Fahrzeug-Vorderachse (in Fzg.-Längsrichtung)

Es hat sich herausgestellt, dass die Fahrbahn-Rückmeldung für den Fahrer insbesondere mit einer (soweit beschriebenen) Berücksichtigung der Querbeschleunigung erheblich verbessert werden kann..

**Patentansprüche**

1. Lenksystem für ein Kraftfahrzeug mit einem elektronisch ansteuerbaren Stellglied zur Beeinflussung des für den Fahrer an seiner Lenkhandhabe spürbaren Lenkmoments, insbesondere Servolenksystem mit einem Elektromotor, der ein den Fahrer beim Aufbringen der Lenkkräfte unterstützendes Servomoment direkt einleitet, wobei das Stellglied und insbesondere der Elektromotor unter Berücksichtung des vom Fahrer aufgebrachten Lenkmoments und des hieraus resultierenden Lenkwinkels sowie zumindest einer vom Fahrverhalten des Fahrzeugs abgeleiteten Korrekturgröße, die über ein Hochpassfilter oder ein Differenzierglied geleitet berücksichtigt wird, geeignet angesteuert wird,
**dadurch gekennzeichnet, dass** als Korrekturgröße die Querbeschleunigung an der die lenkbaren Räder aufweisenden Fahrzeug-Vorderachse der konventionellen Ansteuerung des Stellglieds, insbesondere des Elektromotors, aufgeschaltet wird.

2. Lenksystem nach Anspruch 1,
**dadurch gekennzeichnet, dass** die Korrekturgröße in der Höhe beschränkt aufgeschaltet wird.

3. Lenksystem nach Anspruch 1 oder 2,
**dadurch gekennzeichnet, dass** eine fahrgeschwindigkeitsabhängige Verstärkung der Korrekturgröße durchgeführt wird.

4. Lenksystem nach einem der vorangegangenen Ansprüche,
**dadurch gekennzeichnet, dass** eine amplitudenabhängige Verstärkung der Korrekturgröße durchgeführt wird.

**Claims**

1. A steering system for a motor vehicle with an electronically activatable control element for influencing the steering torque noticeable by the driver at his steering actuator, especially a power assisted steering system with an electric motor, which directly introduces a power assisted torque assisting the driver in applying the steering forces, the control element and especially the electric motor being suitably activated taking into account the steering torque applied by the driver and the steering angle resulting therefrom as well as at least one correction variable which is derived from the handling of the vehicle and, guided via a high-pass filter or a differentiation element, is taken into account, **characterised in that** the lateral acceleration at the front vehicle axle having the steerable wheels, of the conventional activation of the control element, especially of the electric motor, is applied as the correction variable.

2. A steering system according to claim 1, **characterised in that** the correction variable is applied in a manner limited with respect to the level.

3. A steering system according to claim 1 or 2, **characterised in that** a driving speed-dependent amplification of the correction variable is carried out.

4. A steering system according to any one of the preceding claims, **characterised in that** an amplitude-dependent amplification of the correction variable is carried out.

**Revendications**

1. Système de direction de véhicule automobile comportant un organe d'actionnement à commande électronique pour influencer le couple de direction perceptible par le conducteur au niveau de l'organe de direction, notamment système de direction assistée, équipé d'un moteur électrique qui induit directement le servo-couple assistant le conducteur appliquant des efforts de direction,
   l'organe d'actionnement et notamment le moteur électrique est commandé en tenant compte du couple de direction appliqué par le conducteur et de l'angle de braquage qui en résulte ainsi que d'au moins une grandeur de correction déduite du comportement de conduite du conducteur, cette grandeur étant prise en compte à travers un filtre passe haut ou un élément différentiateur,
   **caractérisé en ce que**
   la grandeur de correction appliquée est l'accélération transversale à l'essieu avant du véhicule à roues directrices de la commande classique de l'organe d'actionnement notamment du moteur électrique.

2. Système de direction selon la revendication 1,
   **caractérisé en ce que**
   la grandeur de correction est appliquée avec une amplitude limitée.

3. Système de direction selon la revendication 1 ou 2,
   **caractérisé en ce qu'**
   la grandeur de correction est amplifiée en fonction de la vitesse de déplacement.

4. Système de direction selon l'une des revendications précédentes,
   **caractérisé en ce qu'**
   la grandeur de correction est amplifiée en fonction de l'amplitude.

$v_{FZG}$

$F_{SS}$

Fahrzeug

$a_{y\prime\prime}$

$u_{zs}$

$\delta_H$

Fahrer

Lenkstrang

$M_H$

$M_A$

Amplituden und Fahrgeschwindigkeits-abhängige Verstärkung

Aktuator

$c$

Hochpass-filterung

Fahrgeschwindigkeits-abhängige Begrenzung

$M_{Soll}$

$+$

$+$

Konventionelle Ansteuerung

$\delta_H, M_{DS}, n_{ROT}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3822171 C2

- DE 10337086 A1